# EUROPEAN PATENT APPLICATION

(11) **EP 2 617 520 A1**
(43) Date of publication of application: **24.07.2013**
(21) Application number: 11824920.0
(22) Date of filing: 09.08.2011
(51) Int. Cl.: B23Q 11/00, B23B 25/00

(54) **TOOL WITH SWARF GUIDE, AND LATHE**

(30) Priority: 15.09.2010 JP 2010206315
(71) Applicant: Murata Machinery, Ltd., Minami-ku Kyoto-shi Kyoto 601-8326 (JP)
(72) Inventor: MATSUKURA, Yasuhiro, Inuyama-shi Aichi 484-8502 (JP); TAKEUCHI, Hidetoshi, Kyoto-shi Kyoto 612-8686 (JP)
(74) Representative: Hersina, Günter
(86) International application number: PCT/JP2011/068131
(87) International publication number: WO 2012/035912

(57) **Abstract**

A cutting device (1) with chip guide includes a cutting tool (2), a chip guide unit (3) having defined therein a hole-shaped chip guiding channel (5), which has an inlet (6) and an outlet (7) defined respectively in the vicinity of an area of contact of the cutting tool (2) with a workpiece (W) and at a location remote from the workpiece (W), and a forced discharge fluid medium supply unit (20) to supply a fluid medium from a location partway of the chip guiding channel (5) towards the outlet (7). The forced discharge fluid medium supply unit (20) has a fluid supply port (15) defined in an inner wall surface of the chip guiding channel (5) so as to open towards the outlet (7) in a fashion tilted relative to a longitudinal axis of such guiding channel (5). This fluid supply port (15) is of a shape opening in the inner wall surface of the chip guiding channel (5) over an entire range of circumference thereof.

## Description

### CROSS REFERENCE TO THE RELATED APPLICATION

This application is based on and claims Convention priority to Japanese patent application No. 2010-206315, filed September 15, 2010, the entire disclosure of which is herein incorporated by reference as a part of this application.

### BACKGROUND OF THE INVENTION

### (Field of the Invention)

The present invention relates to a cutting device with a chip guide, which device is used in the practice of a cutting process, and more specifically to a cutting device with a chip guide, that is suitably used in the practice of a cutting process particularly where the amount of cut is small and/or a cutting process in which a material having a high ductility is being cut.

The present invention also relates to a lathe utilizing such cutting device of the kind referred to above.

### (Description of Related Art)

Since chips, which are produced when a metallic material is cut by a cutting tool in a lathe, are generally spirally curled, a cutting tool and/or a workpiece being cut are apt to be entwined or entangled with the chips, and, therefore, this is considered constituting a major cause of the automation of the lathe being hampered. So long as the chips from the workpiece made of a material of a kind having a low ductility are concerned, the prevention of the chips from entwining with the cutting tool and/or the workpiece has hitherto achieved some positive results when with the use of a chip breaker the chips are broken or segmentalized. However, since the chip breaker is of a type in which curling of the chips is further enhanced to facilitate breakage and segmentation of the chips, in the case of the small amount of cut, the chips have a high flexibility enough to allow the chips to be easily curled, and therefore, the satisfactory segmentation of the chips with the chip breaker is difficult to achieve. It has also been found that even the chips of the workpiece made of a material of a kind having a high ductility is similarly difficult to be segmentalized because of the reason similar to that discussed above. For these reasons, a cutting device has been desired for, which is suitably employed in the practice of a cutting work, in which the small amount of cut and/or a cutting work applied to the material of a kind having a high ductility.

In view of the foregoing, the assignee of the present invention previously has suggested a cutting device with a chip guide having a chip guiding path or channel defined therein, an inlet and an outlet of which channel are disposed in the vicinity of an area of contact of the cutting tool with a workpiece to be cut and at a location remote from the cutting tool and the workpiece, respectively, so that the chips captured through the inlet into the chip guiding channel can be forcibly discharged towards the outlet by means of a forced discharge fluid medium then flowing through the chip guiding channel. In this respect, see the patent document 1 listed below. When the cutting device with the chip guide is employed, the chips are elongated and are then discharged through the chip guiding channel to a position distant from the cutting tool and the workpiece, and, therefore, the cutting can be accomplished favorably without the chips being entwined with the cutting tool and/or the workpiece being cut.

### [Patent Literature]

[Patent Document 1] JP Laid-open Patent Publication No. 2010-120156

Since the cutting device with the chip guide disclosed in the patent document 1 referred to above is of such a structure that the forced discharge fluid medium is supplied into the chip guiding channel through one peripheral site in an inner wall surface of the chip guiding channel, the flow of the forced discharge fluid medium within the chip guiding channel tends to fail to stabilize and a turbulent flow tends to occur therein. For this reason, it has been found that the efficiency of transporting the chips through the chip guiding channel towards the outlet thereof is lowered and a considerable amount of the forced discharge fluid medium has been required to assuredly discharge the chips produced in a substantial amount. Also, it has also been found that when the flow of the forced discharge fluid medium is a turbulent flow, an effect to straighten the chips is so low that some of the chips left curled are apt to be caught by an inner wall of the chip guiding channel.

### SUMMARY OF THE INVENTION

In view of the foregoing, the present invention has for its primary object to provide a cutting device with a chip guide, which is effective to efficiently guide the chips of the workpiece being cut from an area of contact of a cutting tool with the workpiece to a position distant therefrom under a condition in which the chips of the workpiece has been straightened, and in which a consumption of the forced discharge fluid medium can be suppressed.

In order to accomplish the foregoing objects, the present invention provides a cutting device with a chip guide, which includes a cutting tool having a cutting edge member engageable with a workpiece to be cut, a chip guide unit having defined therein a hole-shaped chip guiding channel, an inlet and an outlet of which channel are defined in the vicinity of an area of contact of the cutting tool with a workpiece to be cut and at a location remote from the cutting tool and the workpiece, respectively; and a forced discharge fluid medium supply unit to supply a fluid medium from a location partway of the chip guiding channel towards the outlet of the chip guiding channel. The forced discharge fluid medium supply unit referred to above has a fluid supply port defined in an inner wall surface of the chip guiding channel so as to open towards the outlet of the chip guiding channel in a fashion tilted relative to a longitudinal axis of such guiding channel, the fluid supply port being of a shape open in the inner wall surface of the chip guiding channel over an entire range of circumference thereof or of a shape opening at a plurality of circumferentially dispersed sites in the inner wall surface of the chip guiding channel.

According to this construction, the fluid medium is supplied by the forced discharge fluid medium supply unit into the chip guiding channel. Since the fluid medium supply port is inclined towards the side of the outlet of the chip guiding channel, the fluid medium so supplied flows towards the outlet of the chip guiding channel. By the effect of the flow of the fluid medium, a negative pressure is developed on the side of the inlet of the chip guiding channel and, hence, the chips generated as a result of cutting with the cutting tool are sucked from the inlet, positioned in the vicinity of the cutter edge, into the chip guiding channel. The chips so sucked are discharged from the outlet together with the fluid medium, after having been straightened and having been guided towards the outlet.

Since the fluid medium supply port is of a shape open in the inner wall surface of the chip guiding channel over an entire range of circumference thereof or of a shape opening at a plurality of circumferentially dispersed sites in the inner wall surface of the chip guiding channel, the fluid medium flows along the inner wall surface of the chip guiding channel and the speed of flow thereof is about equal at various circumferential portions thereof. In other words, the flow of the fluid medium is represented by a rectification along the inner wall surface of the chip guiding channel. Accordingly, a large suction force can be obtained at the inlet of the chip guiding channel and, at the same time, a large force of transportation can be obtained within the chip guiding channel. As a result, even with a small amount of the fluid medium supplied, the chips can be assuredly guided stably towards the outlet. The possibility of the chips striking against the inner wall surface of the chip guiding channel is low and the chips being caught will occur hardly. Also, if the flow of the fluid medium is a rectification along the inner wall surface of the chip guiding channel, an effect of elongating the chips is large.

In a preferred embodiment of the present invention, the forced discharge fluid medium supply unit may include a fluid medium reservoir provided around the chip guiding channel in communication with the fluid medium supply port for reserving the fluid medium temporarily so that the fluid medium can be supplied to the fluid medium reservoir.

The provision of the fluid medium reservoir is effective to stabilize the pressure and the amount of flow of the fluid medium supplied from the fluid supply port into the chip guiding channel. Accordingly, it is possible to stabilize the flow of the fluid medium within the chip guiding channel to thereby enhance the efficiency of guiding the chips.

Where the fluid medium reservoir is employed as discussed above, the chip guide unit may include a chip guide block fixed to the cutting tool and provided with the fluid medium reservoir, in which case the chip guide block is preferably formed with the inlet and an extension member fitted to the chip guide block and formed with the outlet. The extension member referred to above may be, for example, a tube. According to this construction, the chips can be guided from the cutting tool to a site distant therefrom.

Where the chip guide block and the extension member are employed, the chip guide block may include an upstream member having the inlet defined therein, an intermediate member having a hollow defining the fluid medium reservoir, and a downstream member fluid connected with the extension member, in which case the intermediate member has its opposite ends fluid connected with the upstream member and the downstream member, respectively, with an outer peripheral wall of the hollow being formed with a communicating hole to supply the fluid medium therethrough to the fluid medium reservoir; and the upstream member includes a first sleeve communicated with the inlet and protruding from the upstream member towards the fluid medium reservoir whereas the downstream member includes a second sleeve communicated with the extension member and protruding from the downstream member towards the fluid medium reservoir, and within the fluid medium reservoir, an outer diametric surface of a free end of the first sleeve and an inner diametric surface of a free end of the second sleeve are held in face to face relation to each other with a gap intervening therebetween, the fluid medium supply port being defined in this gap. According to this construction, the chip guide unit can be assembled with a simplified structure.

In this case, an outer diameter of the free end of the first sleeve may be of a tapering shape and an inner diameter of the free end of the second sleeve may then be of a flaring shape. According to this feature, the fluid medium supply port of the chip guiding channel open so as to incline towards the outlet can be formed with a simplified structure.

In another preferred embodiment of the present invention, instead of the use of the first and second sleeves referred to above, one of the upstream and downstream members may be provided with a sleeve communicated at one end with the inlet and communicated with at opposite end with the extension member, which sleeve extends across the fluid medium reservoir to the other of the upstream and downstream members. In such case, within the fluid medium reservoir, an outer peripheral wall of the sleeve has a plurality of throughholes defined therein so as to deploy over the circumference thereof, the throughholes forming the fluid medium supply port. According to this construction, the chip guide unit can be constructed with a simplified structure.

The present invention in accordance with another aspect thereof provides a lathe which includes a main shaft to rotatably support a workpiece to be cut and a cutting device movable relative to the workpiece, then supported by and rotating together with the main shaft, for which device the cutting device with the chip guide designed and constructed in accordance with the present invention is employed.

Since the cutting device with the chip guide has functions and effects both similar to those which have been previously discussed, the lathe having this cutting device with the chip guide mounted thereon has a capability that chips generated as a result of the cutting process with the small amount of cut and/or chips of the workpiece made of a material having a high ductility can be guided efficiently from the point of contact of the cutting tool with the workpiece to the location distant therefrom in the form as elongated and, therefore, it is possible to avoid the entwining of the chips with the cutting tool and/or the workpiece.

Any combination of at least two constructions, disclosed in the appended claims and/or the specification and/or the accompanying drawings should be construed as included within the scope of the present invention. In particular, any combination of two or more of the appended claims should be equally construed as included within the scope of the present invention.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is a perspective view showing a cutting device with a chip guide, which device is designed in accordance with a first preferred embodiment of the present invention;
Fig. 2 is a longitudinal sectional view of the cutting device with the chip guide shown in Fig. 1;
Fig. 3 is a fragmentary sectional view showing, on an enlarged scale, of an important portion of the cutting device of Fig. 2;
Fig. 4 is a cross sectional view taken along the line IV-IV in Fig. 2;
Fig. 5 is a side view, with a portion cut out, showing a lathe having mounted thereon the cutting device with the chip guide shown in Figs. 1 to 4;
Fig. 6 is a sectional view showing the cutting device with the chip guide that is designed in accordance with a second preferred embodiment of the present invention; and
Fig. 7 is a cross sectional view taken along the line VII-VII in Fig. 6.

### DESCRIPTION OF PREFERRED EMBODIMENTS

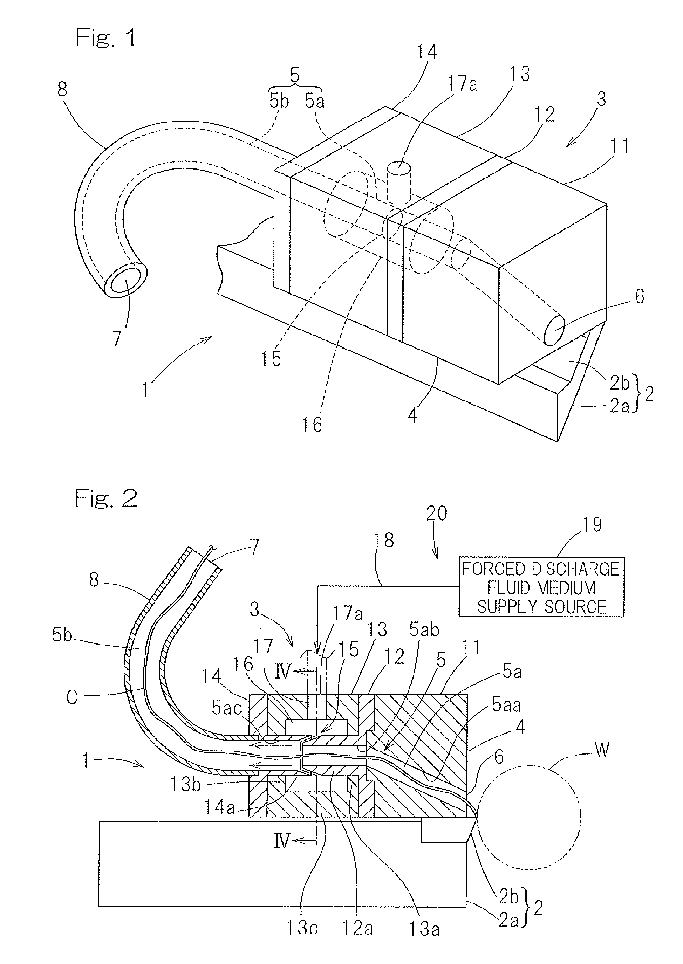

In the first place, a first preferred embodiment of the present invention will now be described in detail with particular reference to Figs. 1 to 4. As best shown in Figs. 1 and 2, the cutting device with the chip guide, generally identified by 1, includes a cutting tool 2 for performing a turning process or a cutting process in contact with a workpiece W then rotating, and a chip guide unit 3 having a chip guiding channel 5 defined therein for guiding chips C (best shown in Fig. 2) from a site of contact of the cutting tool 2 with the workpiece W therethrough to a location distant therefrom therethrough, which chips are produced during the turning process with the cutting tool 2, and a forced discharge fluid medium supply unit 20 for supplying a fluid medium required to forcibly discharge the chips C within the chip guiding channel 5 in the chip guide unit 3 towards an outlet of the chip guiding channel 5. The cutting tool 2 so far employed in the illustrated instance is made up of a shank 2a and a cutting edge member or cutter bit 2b which may be fitted to or otherwise formed integrally with a tip of the shank 2a.

The chip guide unit 3 referred to above includes a block-like chip guide block 4, that is fixed to a surface area, (an upper surface area so far shown in Figs. 1 and 2) of the shank 2a in the cutting tool 2 to which the cutter bit 2b is fitted, and the chip guiding channel 5 has an intra-main body guide passage 5a defined within the chip guide block 4. The chip guiding channel 5 is in the form of a shape of a round sectioned hole and has an inlet 6 and an outlet 7 defined therein at respective opposite ends thereof, with the inlet 6 being positioned in the vicinity of the cutter bit 2b of the cutting tool 2 and the outlet 7 being positioned at a site remote from the cutter bit 2b. The chip guiding channel 5 referred to above is made up of the intra-main body guide passage 5a and an extra-main body guide passage 5b. The extra-main body guide passage 5b is in the form of an inner diametric hole of an extension member 8 which is like a tube and is fluid connected with one end of the intra-main body guide passage 5a remote from the inlet 6, that is, a tool root side end so as to protrude outwardly from the chip guide block 4, with the inlet 6 and the outlet 7 defined respectively in the chip guide block 4 and the extension member 8.

The chip guide block 4 is made up of first to fourth guide block forming members 11, 12, 13 and 14 arranged sequentially in this order from an upstream side of the chip guiding channel 5 adjacent the inlet 6 to a downstream side thereof adjacent the tool root side. As best shown in Fig. 2, the first guide block forming member 11 is formed with an inclined passageway 5aa, which forms a part of the intra-main body guide passage 5a and is slanted so as to gradually divert in a direction away from the cutting tool 2 from the inlet 6 of the chip guiding channel 5 towards the tool root side, that is, so as to extend diagonally upwardly from the inlet 6 of the chip guiding channel 5 as viewed in Figs. 1 and 2. The second and fourth guide block forming members 12 and 14 have respective first and second sleeves 12a and 14a that extend coaxially in corresponding directions close towards each other. Specifically, the first and second sleeves 12a and 14a extend in a direction towards a hollow of the third guide block forming member 13 as will be described later. The first and second sleeves 12a and 14a in the second and fourth guide block forming members 12 and 14 have defined therein respective upstream and downstream passageways 5ab and 5ac, forming corresponding parts of the intra-main body guide passage 5a and extending parallel to or substantially parallel to an upper surface of the cutting tool 2. It is to be noted that the terms "upstream" and 'downstream" referred to above and hereinafter are to be understood as used in relation to the direction of flow of the chips from the inlet 6 towards the outlet 7 of the chip guiding channel 5.

A base end of the first sleeve 12a, that is, a first end (upstream end) of the upstream passageway 5ab is communicated with the inlet 6 through the inclined passageway 5aa. A tip end of the first sleeve 12a, that is, a second end (downstream end) of the upstream passageway 5ab, opposite to the above mentioned first end thereof, is communicated with the downstream passageway 5c. The inclined passageway 5aa, the upstream passageway 5ab and the downstream passageway 5ac cooperate with each other to form the previously described intra-main body guide passage 5a. In other words, the first and second guide block forming members 11 and 12 cooperate with each other to form an upstream structure of the chip guide block 4; the fourth guide block forming member 14 forms a downstream structure of the chip guide block 4; and the third guide block forming member 13 forms an intermediate structure of the chip guide block 4 positioned intermediate between the upstream and downstream structures. It is, however, to be noted that the first and second guide block forming members 11 and 12 may be formed integrally with each other to provide the upstream structure.

The extension member 8 referred to previously is fixed to the chip guide block 4 with its base end (upstream end) inserted into the fourth guide block forming member 14. In other words, a base end of the second sleeve 12b, that is, a base end (downstream end) of the downstream passageway 5ac is communicated with the extra-main body guide passage 5b. It is to be noted that in Fig. 1, the respective wall thicknesses of the first and second sleeves 12a and 14a are disregarded in favor of the intra-main body guide passage 5a shown there.

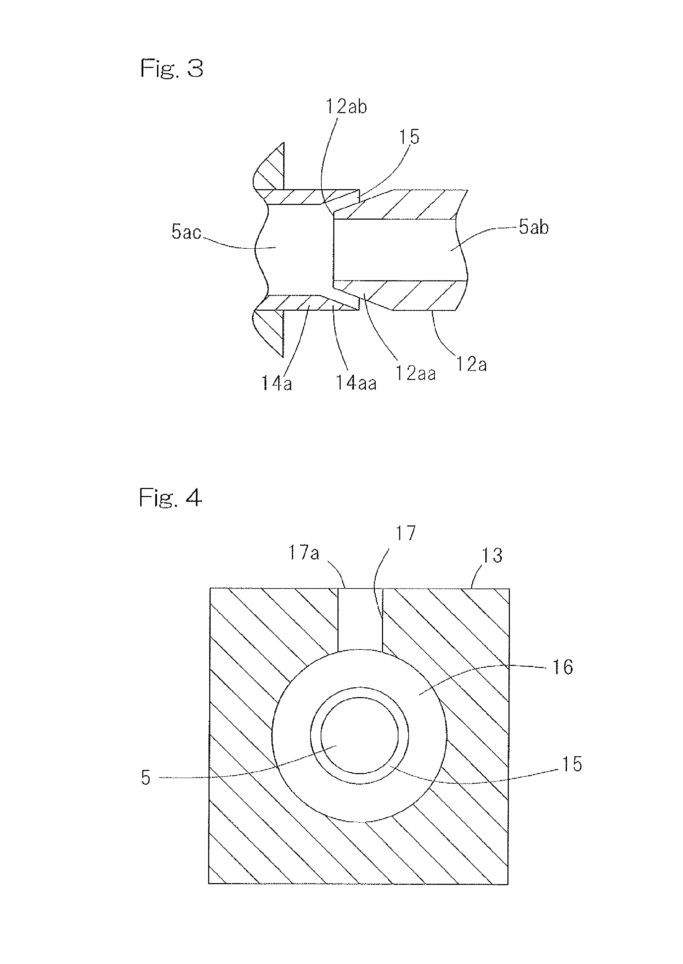

As best shown in Fig. 3 showing an portion of Fig. 2 on an enlarged scale, the first sleeve 12a of the second guide block forming member 12 has a free end portion 12aa remote from the first guide block forming member 11 and this free end portion 12aa of the first sleeve 12a has an outer diameter gradually reduced radially inwardly to allow such free end portion to represent an axially tapered configuration. On the other hand, the second sleeve 14a of the fourth guide block forming member 14 has a free end portion 14aa remote from the extension member 8 and this free end portion 14aa of the second sleeve 14a has an inner diameter gradually increased radially outwardly to allow such free end portion to represent an axially flared configuration. With the respective free end portions 12aa and 14aa of the first and second sleeves 12a and 14a so shaped as hereinabove described, an outer diametric surface of the free end portion 12aa of the first sleeve 12a and an inner diametric surface of the free end portion 14aa of the second sleeve 14a are positioned in face to face relation with each other with a gap intervening therebetween. This gap is defined at the boundary between the upstream and downstream passageways 5ab and 5ac over the entire circumference thereof and is rendered to be a fluid medium supply port 15 that is opened while being inclined towards the outlet 7 of the chip guiding channel 5. It is to be noted that the first sleeve 12a of the second guide block forming member 12 has an inner diameter smaller than that of the second sleeve 14a of the fourth guide block forming member 14 and, hence, a stepped face 12ab towards the outlet 7, which face 12ab is comprised of a free end face of the free end portion 12aa of the second guide block forming member 12, is formed at the boundary between the upstream and downstream passageways 5ab and 5ac.

As best shown in Fig. 2, the third guide block forming member 13 referred to previously has the hollow as hereinbefore described, which hollow opens to face towards the side of the tool tip and also towards the side of the root thereof, and also has a main body portion 13c having first and second collars 13a and 13b defined on respective lateral sides thereof so as to protrude inwardly. The first and second collars 13a and 13b are engaged with an outer periphery of the first sleeve 12a of the second guide block forming member 12 and an outer periphery of the second sleeve 14a of the fourth guide block forming member 14, respectively. In other words, the opposite ends of the third guide block forming member 13 are connected with the second and fourth guide block forming members 12 and 14, respectively. A fluid medium reservoir 16 for temporarily storing the fluid medium is formed in the main body portion 13c, which lies between the first and second collars 13a and 13b, and around a portion of the chip guiding channel 5 between the first and second sleeves 12a and 14a that protrude into the hollow in the third guide block forming member 13. In other words, the hollow in the third guide block forming member 13 forms the fluid medium reservoir 16.

The fluid medium reservoir 16 referred to above is communicated with a halfway location or a location partway of the intra-main body guide passageway 5a through the fluid medium supply port 15. On the other hand, an outer peripheral wall of the main body portion 13c of the third guide block forming member 13 is provided with a communication hole 17 to communicate between the fluid medium reservoir 16 and the outside of the chip guide block 4. The communicating hole 17 has an outside opening 17a that is fluid connected with a forced discharge fluid medium supply source 19 through a fluid medium supply tube 18. The forced discharge fluid medium supply source 19 is operable to supply a fluid medium, such as, for example, an air required to forcibly discharge the chips in a manner as will be described later. The fluid medium reservoir 16, the communicating hole 17, the fluid medium supply tube 18 and the forced discharge fluid medium supply source 19 altogether form a forced discharge fluid medium supply unit 20.

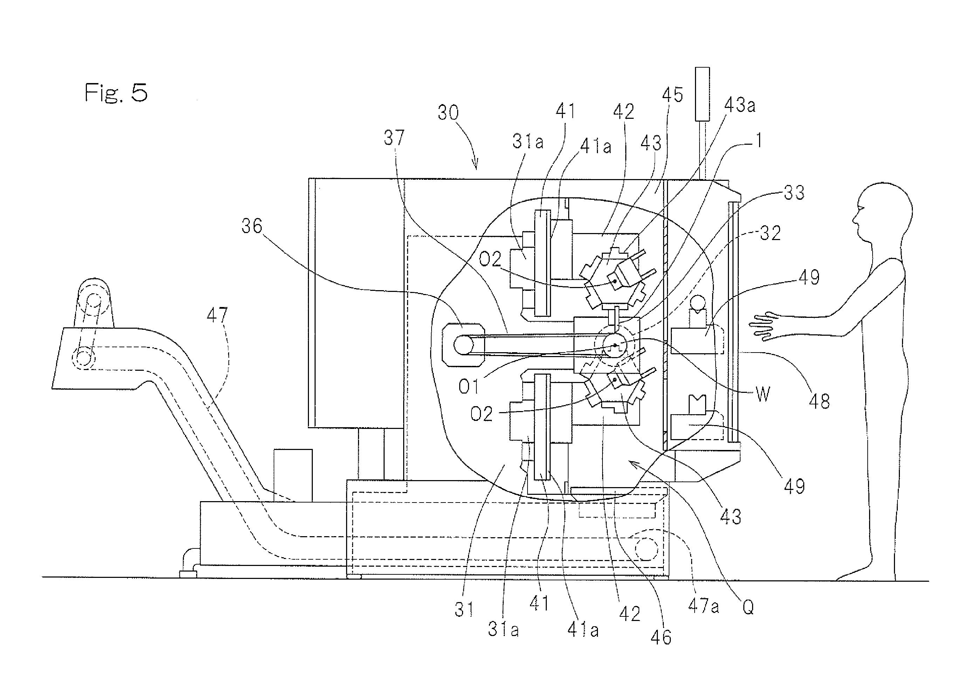

The cutting device 1 with the chip guide of the structure hereinabove described is used in the form as mounted on, for example, a lathe as shown in Fig. 5. Referring now to Fig. 5, the lathe, generally identified by 30, includes a main shaft 32 rotatably mounted on a machine bed 31 through a headstock 33 so as to extend in a bilateral direction when viewed from front, and a tailstock (not shown) is disposed on a line of extension of a shaft axis O1 of the main shaft 32. One end of the workpiece W is mounted on the main shaft 32 through any known chuck (not shown) fixedly connected with a free end of the main shaft 32 while the other end thereof is supported by the tailstock. The main shaft 32 is driven by a main shaft motor 36 such as, for example, a servomotor through a transmission mechanism 37.

Movably positioned above and below the position at which the workpiece W is supported by the main shaft 32 are turret type upper and lower tool posts or tool rests 43 through toolslides 41 and lifters 42, respectively. Each of the toolslides 41 is mounted on a respective first guide unit 31a provided in the machine bed 31 for selective advancing or retracting movement in a horizontal direction so as to extend horizontally. Each of the lifters 42 is mounted on a respective second guide unit 41a provided in the associated feed table 41 for selective movement up or down in a vertical direction so as to extend vertically. Each of the toolslides 41 and each of the lifters 42 are driven by an corresponding drive unit (not shown), comprised of a servomotor and a feed screw mechanism, so as to move horizontally and vertically, respectively. When each of the toolslides 41 is driven horizontally between advanced and retracted positions, the feed of the associated tool post 43 in an axial direction relative to the workpiece W is accomplished. Also, when each of the lifters 42 is driven vertically between lifted and lowered positions, the amount of cut of the workpiece W performed by the cutting device with the chip guide 1 provided on each of the tool posts 43 can be adjusted.

Each of the tool posts 43 referred to above is a polygonal turret type tool post having a plurality of tool mounts 43a defined in an outer peripheral portion thereof and rotatable about a swivel axis 02 that is parallel to the shaft axis O1 of the main shaft 32. It is to be noted that each of the tool mounts 43a may be a portion of the respective tool post or, alternatively, a tool holder provided separate from the tool post 43.

The cutting device with the chip guide 1 is mounted on each of the tool mounts 43a. When each of the tool posts 43 is revolved about the associated swivel axis 02 by an indexing and driving mechanism (not shown), the cutting devices with the chip guide 1 mounted on the respective tool mounts 43a in each tool post 43 are indexed one at a time to a predetermined process position. In the instance as shown, so long as the upper tool post 43 is concerned, a position immediately below the swivel axis 02 about which such upper tool post 43 revolves is the predetermined process position and, so long as the lower tool post 43 is concerned, a position immediately above the swivel axis 02 about which such lower tool post 43 revolves is the predetermined process position.

The lathe 30 referred to above is in its entirety covered by a machine covering 45 and a space within the machine covering 45, where the headstock 33 and the tool posts 43 forms a processing region Q. The bottom of the processing region Q in its entirety is formed in a hopper-like portion 46 of an inclined surface, and a chip conveyor 47 having one end 47a thereof positioned below an open (not shown) portion at a bottom of the hopper-like portion 46 extends rearwardly of the lathe 30 through a space opening in an anteroposterior direction of a lower surface of the machine bed 31. A front area of the processing region Q is selectively closed or opened by an open/close door 48 provided in the machine covering 45. A carry-in and carry-out auxiliary mechanism 49 for assisting the carry-in or carry-out of the workpiece W relative to the main shafts 32 is provided in this open/close door 48.

The lathe 30 of the structure described above performs a cutting process on the workpiece W, then rotatably supported by the main shaft 32, by means of the cutting tool 2 of the cutting device with the chip guide 1 then supported by the corresponding tool post 43. During the execution of the cutting process, the forced discharge fluid medium supply source 19 of the forced discharge fluid medium supply unit 20 best shown in Fig. 2 is held in a position ready to operate. By so doing, the fluid medium from the forced discharge fluid medium supply source 19 is, after having been once supplied to the fluid medium reservoir 16 through the fluid medium supply tube 18 and the communicating hole 17, supplied from the fluid medium reservoir 16 into the chip guiding channel 5 through the fluid medium supply port 15. Since the use is made of the fluid medium reservoir 16, the pressure and amount of the fluid medium supplied through the fluid medium supply port 15 into the chip guiding channel 5 are stabilized.

Since the fluid medium supply port 15 is opened towards the outlet 7 of the chip guiding channel 5, the fluid medium supplied in the manner described above flows towards the outlet 7 of the chip guiding channel 5. Also, since the stepped face 12ab oriented towards the outlet 7 is formed at the boundary between the upstream passageway 5ab and the downstream passageway 5ac, where the fluid medium supply port 15 is defined, the structure is such that the fluid medium supplied from the fluid medium supply port 15 into the chip guiding channel 5 will hardly flow towards the inlet 6. Thanks to the flow of the fluid medium described above, a negative pressure is developed on the side of the inlet 6 of the chip guiding channel 5 and chips C generated as a result of cutting are sucked into the chip guiding channel 5 through the inlet 6 then positioned in the vicinity of the cutter bit 2b. The chips C so sucked into the chip guiding channel 5 are transported together with the fluid medium while being elongated, and are finally discharged from the outlet 7. Accordingly, it is possible to avoid an undesirable entwining of the chips with the cutting tool 2 and/or the workpiece W.

Since the fluid medium supply port 15 is provided in the inner wall of the chip guiding channel 5 over the entire circumference thereof, the fluid medium flows along an inner wall surface of the chip guiding channel 5 at a speed that is about equal at all circumferential portions of the inner wall surface thereof. In other words, the flow of the fluid medium is a rectified flow, i.e., is rectified along the inner wall surface of the chip guiding channel 5. Accordingly, a large suction force can be obtained at the inlet 6 of the chip guiding channel 5 and, at the same time, a large force of transportation can be obtained within the chip guiding channel 5. As a result, even with a small amount of the fluid medium supplied, the chips C can be assuredly guided stably towards the outlet 7. The possibility of the chips C striking against the inner wall surface of the chip guiding channel 5 is low and the chips being caught will occur hardly. Also, if the flow of the fluid medium is a rectified flow along the inner wall surface of the chip guiding channel 5, an effect of elongating the chips C is large and a post-processing of the chips after the latter have been discharged is easy to achieve.

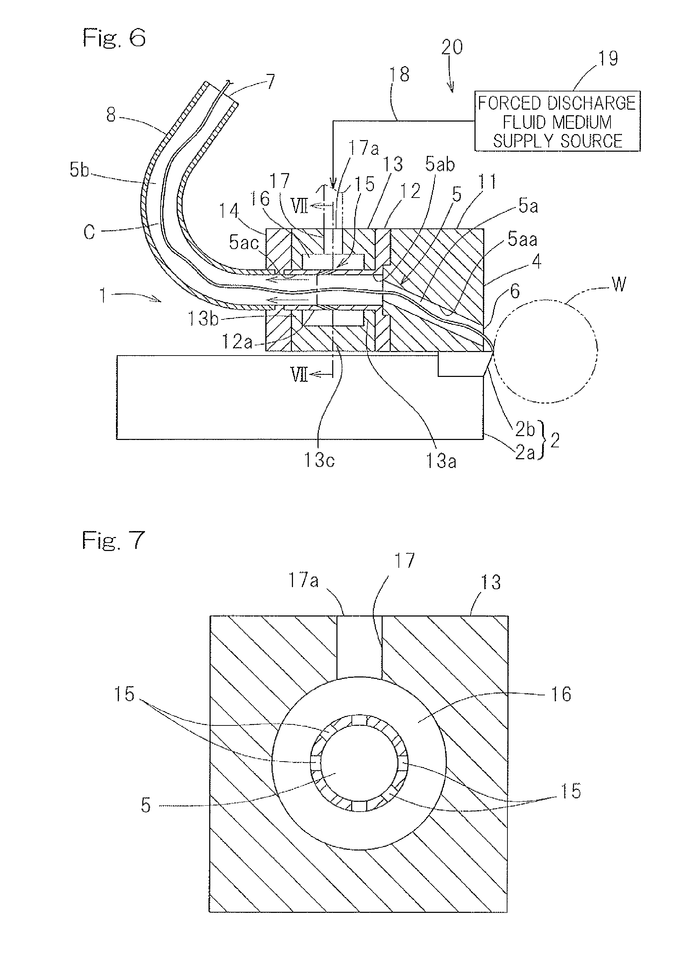

Figs. 6 and 7 illustrate a second preferred embodiment of the present invention. The cutting device with the chip guide 1 shown in Figs. 6 and 7 is substantially similar to that described hereinbefore and designed in accordance with the first embodiment, but differs therefrom in that the fluid medium supply port 15 is dispersed over and opened at a plurality of circumferential portions of the inner wall surface of the chip guiding channel 5. In the instance as shown in Figs. 6 and 7, no sleeve such as designated by 14a in Figs. 2 and 3 is employed in the fourth guide block forming member 14, but the first sleeve 12a of the second guide block forming member 12 is made to extend across the fluid medium reservoir 16 to a position at which it adjoins the fourth guide block forming member 14, with the fluid medium supply port 15 formed in an outer peripheral wall of the first sleeve 12a. The fluid medium supply port 15 employed in the practice of the second embodiment is comprised of a plurality of radially extending throughholes that are dispersed over and opened at the circumferential portions referred to above. In other words, the base end (upstream end) of the first sleeve 12a is communicated with the inlet 6 through the inclined passageway 5aa and the tip end (downstream end) thereof is communicated with the extra-main body guide passage 5b of the extension member 8, with a major portion of the first sleeve 12a being positioned within the fluid medium reservoir 16. Other structural features shown in Figs. 6 and 7 are substantially similar to those of the previously described first embodiment. It is to be noted that the sleeve of the second guide block forming member 12 may be dispensed with and, instead, a sleeve extending to the position at which it contacts the second guide block forming member 12 may be formed in the fourth guide block forming member 14.

Even with this construction according to the second embodiment, the fluid medium supplied from the fluid medium supply ports 15 to the chip guiding channel 5 flows along the inner wall surface of the chip guiding channel 5 at a speed that is about equal over the at all circumferential portions of the inner wall surface thereof. Accordingly, as is the case with the first embodiment, a large suction force can be obtained at the inlet 6 of the chip guiding channel 5 and, at the same time, a large force of transportation can be obtained within the chip guiding channel 5, and, hence, the chips C can be assuredly and stably guided towards the outlet 7. Also, the effect of elongating the chips C is high.

Although the present invention has been fully described in connection with the preferred embodiments thereof with reference to the accompanying drawings which are used only for the purpose of illustration, those skilled in the art will readily conceive numerous changes and modifications within the framework of obviousness upon the reading of the specification herein presented of the present invention. Accordingly, such changes and modifications are, unless they depart from the scope of the present invention as delivered from the claims annexed hereto, to be construed as included therein.

**[Reference Numerals]**

| | |
|---|---|
| 1 | Cutting device with chip guide |
| 2 | Cutting tool |
| 2b | Cutter edge member |
| 3 | Chip guide unit |
| 5 | Chip guiding channel |
| 6 | Inlet |
| 7 | Outlet |
| 15 | Fluid medium supply port |
| 16 | Fluid medium reservoir |
| 20 | Forced discharge fluid medium supply unit |
| 30 | Lathe |
| 32 | Main shaft |
| C | Chips |
| W | Workpiece |

## Claims

1. A cutting device with a chip guide, which comprises:
a cutting tool having a cutting edge member engageable with a workpiece to be cut;
a chip guide unit having defined therein a hole-shaped chip guiding channel, the chip guiding channel having an inlet and an outlet defined respectively in the vicinity of an area of contact of the cutting tool with the workpiece and at a location remote from the cutting tool and the workpiece; and
a forced discharge fluid medium supply unit to supply a fluid medium from a location partway of the chip guiding channel towards the outlet of the chip guiding channel;
in which the forced discharge fluid medium supply unit has a fluid supply port defined in an inner wall surface of the chip guiding channel so as to open towards the outlet of the chip guiding channel in a fashion tilted relative to a longitudinal axis of such guiding channel, the fluid supply port being of a shape opening in the inner wall surface of the chip guiding channel over an entire range of circumference thereof or of a shape opening at a plurality of circumferentially dispersed sites in the inner wall surface of the chip guiding channel.

2. The cutting device with the chip guide as claimed in claim 1, further comprising a fluid medium reservoir provided around the chip guiding channel to reserve the fluid medium temporarily, the fluid medium reservoir being communicated with the fluid medium supply port being supplied therethrough to the fluid medium reservoir.

3. The cutting device with the chip guide as claimed in claim 2, in which the chip guide unit comprises:
a chip guide block fixed to the cutting tool and provided with the fluid medium reservoir, the chip guide block being formed with the inlet; and
an extension member fitted to the chip guide block, the extension member being formed with the outlet.

4. The cutting device with the chip guide as claimed in claim 3, in which the chip guide block comprises:
an upstream member having the inlet defined therein;
an intermediate member having a hollow defining the fluid medium reservoir; and
a downstream member fluid connected with the extension member,
the intermediate member having its opposite ends fluid connected with the upstream member and the downstream member, respectively, with an outer peripheral wall of the hollow being formed with a communicating hole to supply the fluid medium therethrough to the fluid medium reservoir,
the upstream member including a first sleeve communicated with the inlet and protruding from the upstream member towards the fluid medium reservoir,
the downstream member including a second sleeve communicated with the extension member and protruding from the downstream member towards the fluid medium reservoir, and
within the fluid medium reservoir, an outer diametric surface of a free end of the first sleeve and an inner diametric surface of a free end of the second sleeve being held in face to face relation to each other with a gap intervening therebetween, the fluid medium supply port being defined in this gap.

5. The cutting device with the chip guide as claimed in claim 4, in which an outer diameter of the free end of the first sleeve is of a tapering shape and an inner diameter of the free end of the second sleeve is of a flaring shape.

6. The cutting device with the chip guide as claimed in claim 3, in which the chip guide block comprises:
an upstream member having the inlet defined therein;
an intermediate member having a hollow defining the fluid medium reservoir; and
a downstream member fluid connected with the extension member,
the intermediate member having its opposite ends fluid connected with the upstream member and the downstream member, respectively, with an outer peripheral wall of the hollow being formed with a communicating hole to supply the fluid medium therethrough to the fluid medium reservoir,
one of the upstream and downstream members being provided with a sleeve communicated at one end with the inlet and communicated with at opposite end with the extension member, the sleeve extending across the fluid medium reservoir to the other of the upstream and downstream members, and
within the fluid medium reservoir, an outer peripheral wall of the sleeve has a plurality of throughholes defined therein so as to deploy over the circumference thereof, the throughholes forming the fluid medium supply port.

7. A lathe which comprises:
a main shaft to rotatably support a workpiece to be cut; and
a cutting device movable relative to the workpiece, then supported by and rotating together with the main shaft, the cutting device being of a construction as defined in claim 1.
